# EUROPEAN PATENT SPECIFICATION

(11) **EP 3 988 339 B1**
(45) Date of publication and mention of the grant of the patent: **15.05.2024**
(21) Application number: 20203072.2
(22) Date of filing: 21.10.2020
(51) Int. Cl.: B60C 11/16

(54) **TIRE STUDS**
REIFENSPIKES
CRAMPONS DE PNEU

(43) Date of publication of application: 27.04.2022
(73) Proprietor: AB Sandvik Coromant, 811 81 Sandviken (SE)
(72) Inventor: Holmström, Erik, 126 80 Stockholm (SE); Olofsson, Ulf, SE 100 44 Stockholm (SE)
(74) Representative: Sandvik

(56) References cited:
- DE-A1-102012 112 658
- FR-A1- 2 080 544
- US-B1- 6 374 886

## Description

This invention relates to tire studs made of cemented carbide with a metal binder comprising Ni that decreases the wear on the road surface.

### Background

Studded tires are widely used during the winter season in the Nordic countries. Tire studs made of cemented carbide for the use in winter tires for anti-skid properties has been known in the art for a long time. Cemented carbide materials are known for its wear resistance properties and high hardness and are used in many applications, such as e.g. metal cutting, wear parts etc.

One of the problems with winter tires provided with studs is that it does not only wear on the ice but also on the road surface below. This have led to that different countries have regulated the used of studded tires by law to avoid premature wear of the roads. Another problem is the air born emissions caused by the wear of the road which can cause health problems.

Another problem with the use of conventional cemented carbide with Co as binder, is that Co is considered to have a negative environmental and health impact and the use of Co might be restricted in the future. The tire studs are also worn, and Co is thus released into the environment.

Cemented carbide tire studs with Co binder with small additions of Ni is known in the art.

In CN103014394, tire studs of cemented carbide studs with a metallic binder based on Co with some Ni addition. This leads to an increased strength and impact toughness.
DE102012112658 describes a spike for a tire with a certain design where the upper part of the spike has a higher wear resistance and a higher density than the lower part of the spike. The upper part of the spike is a cemented carbide with a binder that comprising 6-15 wt% Co, 0-15 wt% Ni and 0-15 wt% Mo. The problem that is solved is to obtain a stud that is both good high abrasion and a low wight of the spike.
FR2080544 describes a method of making an anti-skid stud for a tire. The stud is made of cemented carbide where the binder can be on or more of Co, Fe and Ni. No specific amounts are given. The problem that is solved is to obtain a cheap, simple method of anchoring the stud by applying a metal layer onto the surface of the stud.
US6374886 describes a vehicle tire with studs made of cemented carbide where the binder is one or more of Co, Fe, Ni and Mo. The problem that is solved is to obtain a tire which e.g. have a good grip, little abrasion of the road surface and where the stud also functions at the end of the life cycle of the vehicle. This is achieved by a certain design of the rubber parts of the tires as well as the studs.

It is an object of the present invention to reduce the wear on the road surface and also to reduce the amount of particle emissions.

It is also an object of the present invention to reduce the amount of Co that is released into the environment.

### Detailed description of the invention

The present invention relates to a tire stud made of a cemented carbide comprising at least 50 wt% WC and a metal binder in the amount between 3 and 25 wt%. Where the metal binder comprises at least 30 wt% Ni and less than 50 wt% Co.

By tire stud is herein meant any type of anti-skid stud that is used in tires. It can have any shape common in the art.

By cemented carbide is herein meant a material that comprises at least 50 wt% WC grains as the hard phase and where the WC grains are embedded in a metal binder.

The tire stud comprises WC in an amount of at least 50 wt%, preferably at least 60 wt % more preferably at least 70 wt%. Preferably, the average grain size of the WC grains is between 0.3 and 20 µm, more preferably between 0.5 and 10 µm. The average grain size can be measured in different ways, like e.g. using a mean linear intercept method on a SEM image of the cemented carbide microstructure.

The amount of metal binder in the cemented carbide is suitably between 3 and 25 wt%, preferably between 5 to 15 wt%.

According to the present invention, the metal binder comprises at least 30 wt % Ni, preferably at least 50 wt% Ni.

In one embodiment of the present invention, the metal binder comprises at least 90 wt% Ni, more preferably 95 wt % Ni.

The Co content in the metal binder according to the present invention is suitably less than 50 wt%, preferably less than 30 wt%, more preferably less than 15 wt% of the metal binder.

In one embodiment of the present invention, the cemented carbide is suitably free from Co. By that is herein meant that no Co is added as a raw material during manufacturing of the tire stud. However, small amounts of cobalt might still be present since some of the equipment during cemented carbide manufacturing e.g. the grinding media in the mill, usually is made of cemented carbide with a cobalt binder. By a cemented carbide free from Co herein means than the cemented carbide contains less than 1 wt % Co, preferably less than 0.5 wt% Co.

In one embodiment of the present invention the metal binder suitably comprises at least 5 wt% Fe, preferably at least 10 wt% Fe.

In one embodiment of the present invention the metal binder comprises Fe and Ni so that the total amount of Fe + Ni is at least 80 wt%, preferably in an amount of at least 85 wt% of the metal binder.

In another embodiment of the present invention, the metal binder comprises between 80 and 90 wt% Ni and between 10 and 20 wt% Fe.

In one embodiment of the present invention, the metal binder further comprises Cr in an amount of between 1 and 20 wt% of the metal binder, preferably between 10 and 15 wt% of the metal binder. A certain amount of Cr is beneficial in order to prevent corrosion.

The cemented carbide in the tire stud according to the present invention can also comprise other elements common in the art of cemented carbide e.g. Ti, Nb, Ta, V etc. These elements will to some extent dissolve in the metal binder during sintering. The metal binder usually contains other elements in addition to those added as binder elements, such as e.g. Cr, Co etc. since other metallic elements easily dissolve in the metal binder.

In one embodiment of the present invention, powders from recycled cemented carbide scrap can be used. The cemented carbide scrap has then been processed, for example using the Zn-method. The amount of recycled cemented carbide that can be used as raw material depends on its composition. Since the recycled cemented carbide also contains binder metals, like Co, the amount of recycled cemented carbide has to be adjusted in order to obtain the desired composition of the cemented carbide in the tire studs.

The tire studs are made according to conventional techniques known in the art to make cemented carbides. The powder raw materials like e.g. WC, Ni and Fe powders, are mixed with a milling liquid, typically a water/ethanol mixture and an organic binder, e.g. polyethylene glycol (PEG) and thus forming a slurry. The slurry is then milled for several hours in a mill, e.g. a ball mill or an attritor mill. The milled slurry is then dried into granules. In production this is done using spray drying techniques, but when smaller batches are manufactured, pan drying can also be used. The dried powder is pressed into a green body in the shape of a tire stud. The green body is then sintered to form the final tire stud.

### Description of drawings

Figures 1 and 2 describes filters that collected particles from the tests in Example 2. Figure 1 shows the filters from when the prior art studs were tested whereas Figure 2 shows the filters from when the studs according to the invention were tested.
Figures 3 and 4 describes filters that collected particles from the tests in Example 3. Figure 3 shows the filters from when the prior art studs were tested whereas Figure 4 shows the filters from when the studs according to the invention were tested.

### Example 1

Tire studs were manufactured from the amount of raw material as described in table 1. The tire studs according to the present invention, comprising a NiFe binder is herein denoted Invention 1, whereas the tire studs with a Co binder were commercially available, and are denoted Comparative 1. The amount of metal binder differs between Invention 1 and Comparative 1 since the same hardness of the tire stud was aimed for.

**Table 1**

| | WC (wt%) | Ni (wt%) | Fe (wt%) | Co (wt%) | Cr (wt%) |
|---|---|---|---|---|---|
| Invention 1 | Bal. | 9.07 | 1.72 | 0.06 | - |
| Comparative 1 | Bal. | 0.22 | - | 10.85 | 0.08 |

The tire studs were manufactured by mixing all the powder raw materials together with a water/ethanol milling liquid. The slurry was then milled for 50 hours followed by spray drying. The material was then subjected to a pressing operation forming green bodies in the shape of tire studs. The green bodies were then sintered in vacuum at 1410°C.

**Table 2**

| | HV30 | Density (g/cm³) |
|---|---|---|
| Invention 1 | 1173 | 14.45 |
| Comparative 1 | 1177 | 14.46 |

### Example 2

The wear of the road surface by the different tire studs was then investigated by a pin on disc method. Three different stone materials were used, stone 1, 2 and 3.

The stud was mounted in the equipment and the stone plate (80mm X 80mm X 15 mm) representing the road surface was attached to a rotor. When testing the studded tire samples, the orientation of the stud was perpendicular to the sliding direction, as in real tire-on-road contacts.

The rotating speed for the stone plate was 45 rpm and the total sliding distance for the tire stud was 50 m and the test were repeated 4 times.

The pin-on-disc machine was in a sealed chamber to avoid contamination. The room air was drawn by a fan and entered the chamber through a filter. The particles in the air coming out of the chamber was then analyzed by an optical particle analyzer, TSI Optical Particle Sizer 3330.

The total particle concentration/sliding distance (#/cm³/m) was measured.

The results are shown in table 3 where each value is an average of 4 tests.

**Table 3**

| | Stone 1 | Stone 2 | Stone 3 |
|---|---|---|---|
| Invention 1 | 56.9 | 47.0 | 60.9 |
| Comparative 1 | 87.8 | 57.0 | 92.7 |

The loss of mass/sliding distance (g/m) was also measured. This was done by weighing the stone plates before and after the test. The results are shown in table 4 where each value is an average of 4 tests.

**Table 4**

| | Stone 1 | Stone 2 | Stone 3 |
|---|---|---|---|
| Invention 1 | 15.2 | 10.2 | 13.7 |
| Comparative 1 | 19.7 | 12.7 | 20.3 |

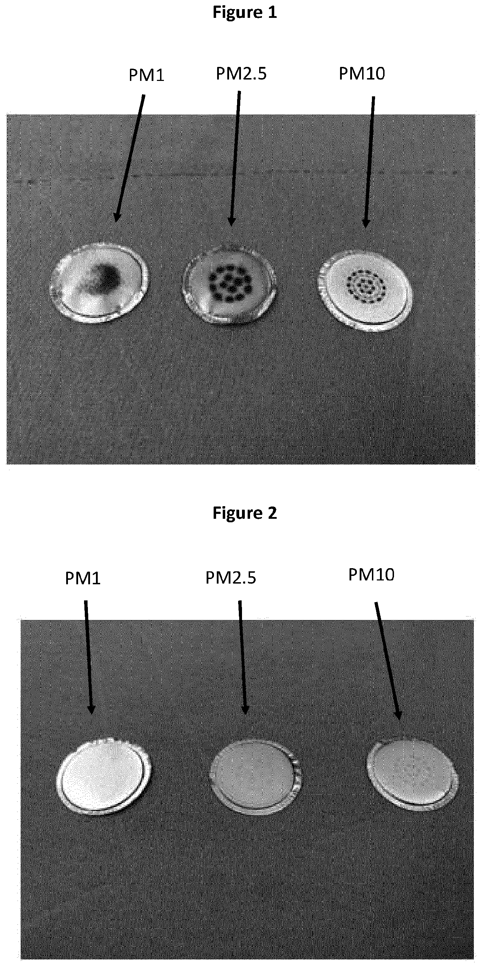

The particles were also detected by placing filters at the outlet of the sealed chamber when the pin-on-disc examples were performed. The filters collected particles of different sizes, 1 µm, 2.5 µm and 10 µm respectively. Figure 1 shows the particles that was accumulated from all three stone types when the studs according to prior art, Comparative 1, were tested. Figure 2 shows the particles that was accumulated from all three stone types when the studs according to the invention, Invention 1, were tested. It can clearly be seen that the studs according to the invention generates far less particles that the prior art studs.

### Example 3

The wear on the road surface caused by the different tire studs was then investigated by a pendulum rig tester.

The same type of tire studs as described in Example 1 were used in this test. The tire studs were mounted onto tires. From the tires, pieces were cut out including two studs each.

The equipment is arranged so that when the pendulum, where the tire pieces with the studs has been mounted, is released from a horizontal position, it will strike the stone material with a constant velocity. Two types of stone materials were tested, stone 2 from example 2, and a fourth type, stone 4.

The stud was mounted at the tip of the pendulum in the equipment and the stone plate (80mm X 80mm X 15 mm) representing the road surface was mounted in the bottom of the equipment. The stone material was hit 200 times and the distance each time was 0,125 m which gives a total distance of 25m.

The pendulum rig tester was placed in a sealed chamber to avoid contamination. The room air was drawn by a fan and entered the chamber through a filter. The particles in the air coming out of the chamber were then analyzed in the same way as in Example 2.

The test was repeated 3 times and the average of those tests are shown in Table 5, where the total particle concentration/sliding distance (#/cm³/m) is shown, and Table 6, where the loss of mass/sliding distance (g/m) is shown.

**Table 5**

| | Stone 2 |
|---|---|
| Invention 1 | 39 |
| Comparative 1 | 51 |

**Table 6**

| | Stone 2 | Stone 4 |
|---|---|---|
| Invention 1 | 8.2E-05 | 0,00092 |
| Comparative 1 | 0.00033 | 0.0015 |

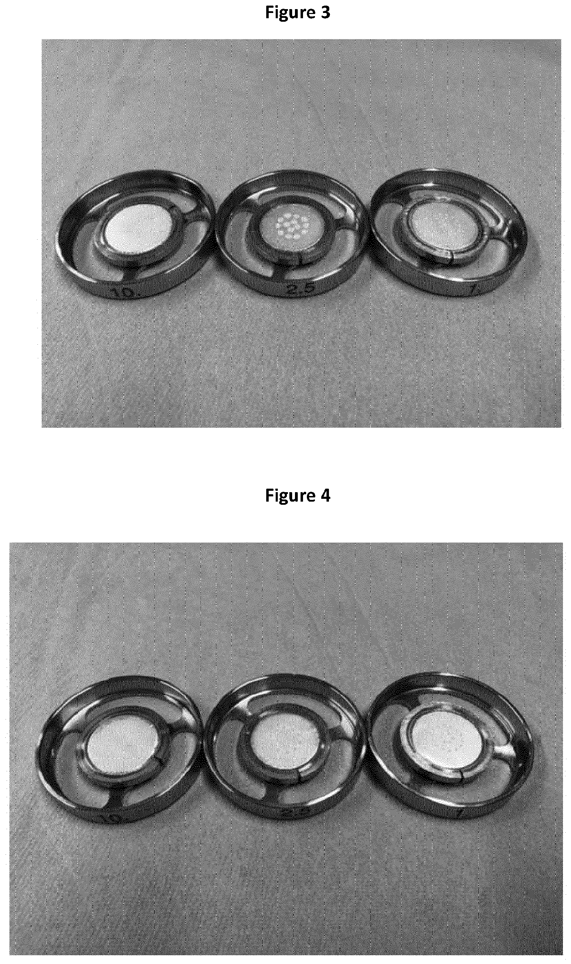

Like in Example 2, particles were also detected by placing filters at the outlet of the sealed chamber when the pendulum tests were performed. The filters collected particles of different sizes, 1 µm , 2.5 µm and 10 µm respectively. Figure 3 shows the particles that was accumulated from both stone types for the studs according to prior art, Comparative 1. Figure 4 shows the particles that was accumulated from both stone types when the studs according to the invention, Invention 1, were tested. It can clearly be seen that the studs according to the invention generates far less particles than the prior art studs.

## Claims

1. A tire stud made of a cemented carbide comprising at least 50 wt% WC and a metal binder in the amount between 3 and 25 wt% wherein the metal binder comprises at least 30 wt% Ni and less than 50 wt% Co **characterized in that** the metal binder further comprises Fe in an amount of at least 5 wt% and Fe and Ni so that the total amount of Fe + Ni is at least 80 wt% of the metal binder.

2. A tire stud according to claim 1 wherein the metal binder comprises at least 50 wt% Ni.

3. A tire stud according to any of the preceding claims wherein the metal binder contains less than 15 wt% Co.

4. A tire stud according to any of the preceding claims wherein the cemented carbide is free from Co.

5. A tire stud according to any of the preceding claims wherein the metal binder comprises between 80 and 90 wt% Ni and between 10 and 20 wt% Fe.

6. A tire stud according to any of the preceding claims wherein the metal binder further comprises Cr in an amount of between 1 and 20 wt% of the binder.

## Patentansprüche

1. Reifenspike hergestellt aus Hartmetall, enthaltend wenigstens 50 Gew.-% WC und ein Metallbindemittel in der Menge zwischen 3 und 25 Gew.-%, wobei das Metallbindemittel wenigstens 30 Gew.-% Ni und weniger als 50 Gew.-% Co enthält, **dadurch gekennzeichnet, dass** das Metallbindemittel ferner Fe in einer Menge von wenigstens 5 Gew.- % enthält und Fe und Ni so, dass die Gesamtmenge an Fe + Ni wenigstens 80 Gew.- % des Metallbindemittels ausmacht.

2. Reifenspike nach Anspruch 1, wobei das Metallbindemittel wenigstens 50 Gew.-% Ni enthält.

3. Reifenspike nach einem der vorangehenden Ansprüche, wobei das Metallbindemittel weniger als 15 Gew.-% Co enthält.

4. Reifenspike nach einem der vorangehenden Ansprüche, wobei das Hartmetall frei von Co ist.

5. Reifenspike nach einem der vorangehenden Ansprüche, wobei das Metallbindemittel zwischen 80 und 90 Gew.-% Ni und zwischen 10 und 20 Gew.-% Fe enthält.

6. Reifenspike nach einem der vorangehenden Ansprüche, wobei das Metallbindemittel außerdem Cr in einer Menge zwischen 1 und 20 Gew.-% des Bindemittels enthält.

## Revendications

1. Crampon de pneu réalisé en un carbure cémenté comprenant au moins 50 % en poids de WC et un liant métallique selon la quantité entre 3 et 25 % en poids, dans lequel le liant métallique comprend au moins 30 % en poids de Ni et moins de 50 % en poids de Co, **caractérisé en ce que** le liant métallique comprend en outre du Fe selon une quantité d'au moins 5 % en poids ainsi que du Fe et du Ni de telle sorte que la quantité totale de Fe + Ni soit égale à au moins 80 % en poids du liant métallique.

2. Crampon de pneu selon la revendication 1, dans lequel le liant métallique comprend au moins 50 % en poids de Ni.

3. Crampon de pneu selon l'une quelconque des revendications précédentes, dans lequel le liant métallique contient moins de 15 % en poids de Co.

4. Crampon de pneu selon l'une quelconque des revendications précédentes, dans lequel le carbure cémenté est exempt de Co.

5. Crampon de pneu selon l'une quelconque des revendications précédentes, dans lequel le liant métallique comprend entre 80 et 90 % en poids de Ni et entre 10 et 20 % en poids de Fe.

6. Crampon de pneu selon l'une quelconque des revendications précédentes, dans lequel le liant métallique comprend en outre du Cr selon une quantité entre 1 et 20 % en poids du liant.
